# EUROPÄISCHE PATENTSCHRIFT

(11) **EP 2 117 897 B1**
(45) Veröffentlichungstag und Bekanntmachung des Hinweises auf die Patenterteilung: **08.05.2019**
(21) Anmeldenummer: 08707594.1
(22) Anmeldetag: 07.02.2008
(51) Int. Cl.: B60T 17/00, B60T 17/02

(54) **DRUCKLUFTVERSORGUNGSANLAGE UND VERFAHREN ZUM BETREIBEN EINER DRUCKLUFTVERSORGUNGSANLAGE**
COMPRESSED AIR SUPPLY SYSTEM AND METHOD FOR OPERATING A COMPRESSED AIR SUPPLY SYSTEM
SYSTÈME DE FOURNITURE D'AIR COMPRIMÉ ET PROCÉDÉ PERMETTANT DE FAIRE FONCTIONNER UN TEL SYSTÈME

(30) Priorität: 07.02.2007 DE 102007005988; 17.01.2008 DE 102008004807
(43) Veröffentlichungstag der Anmeldung: 18.11.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2008/000936
(87) Internationale Veröffentlichungsnummer: WO 2008/095702

(56) Entgegenhaltungen:
- EP-A- 1 464 557
- EP-A- 1 508 488
- WO-A-02/24506
- US-A- 5 114 315

## Beschreibung

Die Erfindung betrifft eine Druckluftversorgungsanlage für ein Nutzfahrzeug, gemäß dem Oberbegriff von Anspruch 1.

Die Erfindung betrifft weiterhin ein Verfahren zum Betreiben einer Druckluftversorgungsanlage für ein Nutzfahrzeug gemäß dem Oberbegriff von Anspruch 11.

Nutzfahrzeuge mit pneumatischen Komponenten benötigen eine Druckluftversorgungsanlage. Die Druckluft wird im Allgemeinen von einem Kompressor in eine Luftaufbereitungsanlage gefördert, wo die eingebrachte Luft in einer Filtereinheit gereinigt wird, um dann schließlich über ein Mehrkreisschutzventil ihrer Verwendung zugeführt zu werden, beispielsweise dem Bremssystem des Nutzfahrzeugs.

Nach dem Erreichen bestimmter Fördermengen beziehungsweise nach dem Ablauf bestimmter Zeiträume ist es erforderlich, die Filtereinheit zu reinigen. Zu diesem Zweck werden Ventile innerhalb der Luftaufbereitungsanlage in einer Weise geschaltet, dass Druckluft aus Vorratsbehältern, entweder den Vorratsbehältern der Betriebsbremskreise oder einem oder mehreren eigens dafür vorgesehenen Vorratsbehältern, rückwärts durch die Filtereinheit strömt, um dann, beladen mit Feuchtigkeit und Fremdpartikeln aus der Filtereinheit, in die Atmosphäre abströmen zu können. Während dieser Regenerierungsphasen wird der Kompressor im Allgemeinen abgeschaltet beziehungsweise in eine Leerlaufphase überführt.

Nachteilig an diesen Regenerationsphasen ist der Druckluftverbrauch. Insbesondere geht unnötigerweise die in der Förderleitung zwischen dem Kompressor und der Filtereinheit vorhandene Druckluft bei der Regeneration verloren, wenn nicht geeignete Gegenmaßnahmen getroffen werden. Um den Verlust dieser Druckluft zu vermeiden, wurde bereits vorgeschlagen, die Förderleitung zwischen dem Kompressor und der Filtereinheit während der Regenerationsphasen abzusperren. Eine solche Absperrung wird auch als "Turbo cut-off' bezeichnet, da der Kompressor vielfach aus dem Turbosystem des Nutzfahrzeugs Druckluft bezieht, so dass das Absperren der genannten Förderleitung einen Luftverlust des Turboladers gering hält. Insbesondere ist es auch möglich, dass der Schubbetrieb des Nutzfahrzeugs zur Druckluftgewinnung ausgenutzt wird, während der Kompressor gleichzeitig fördert. Dies hat eine Energieeinsparung zur Folge.

Bei herkömmlichen Systemen ist nun vorgesehen, in jeder Leerlaufphase des Kompressors eine Regeneration der Filtereinheit durchzuführen. In der Praxis führt dies aber häufig zu einer Überregenerierung der Filtereinheit und somit zu einem übermäßigen Druckluftverlust, so dass letztlich der positive Effekt durch die Kompressorabschaltung durch den Druckluftverlust in negativer Weise überkompensiert wird. Weiterhin ist auch das Nutzen der Schubphasen des Kraftfahrzeugs nicht in allen Belangen unproblematisch, da auch hier Schaltvorgänge, insbesondere solche, die mit der Umschaltung des Kompressors in Beziehung stehen, zu Luftverlusten führen, die mitunter die durch das Ausnutzen der Schubphasen erzielte Energieeinsparung wieder zunichte machen.

Im Hinblick auf ihren Integrationsgrad können Druckluftversorgungsanlagen in verschiedene Klassen eingeteilt werden. Dabei bilden rein pneumatische Systeme sowie mit einer eigenen Steuer- und Regelelektronik ausgestattete elektropneumatische Systeme die Grenzen des Integrationsspektrums. Im vorliegenden Zusammenhang stehen als Semitrockner bezeichnete Systeme im Fokus, das heißt solche Systeme, die einen Lufttrockner sowie elektrisch und pneumatisch ansteuerbare Ventile innerhalb einer Einheit aufweisen, aber von einer externen elektronischen Steuereinheit angesteuert werden. Dies steht dem grundsätzlichem Wunsch nach immer mehr Integration zwar teilweise entgegen, bietet jedoch Vorteile im Hinblick auf die Anordnung der Druckluftversorgungsanlage im Nutzfahrzeug, da die Komponenten unter Berücksichtigung des Bauraumangebots verteilt angeordnet werden können. Die grundsätzlichen Erwägungen zur Energieeinsparung bei der Drucklufterzeugung gelten hier ebenso wie bei voll integrierten Systemen.

Das Dokument EP 1 508 488 A1 beschreibt eine Druckluftaufbereitungsanlage mit einer Steuerelektronik. Die Steuerelektronik schaltet den Kompressor zwischen einer Leerlaufphase und einer Lastlaufphase.

Der Erfindung liegt die Aufgabe zugrunde, die Abschaltung des Kompressors und die Regeneration der Druckluftversorgungsanlage in möglichst ökonomischer Weise aufeinander abzustimmen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung betrifft eine Druckluftversorgungsanlage nach Anspruch 1, wobei eine elektronische Steuereinheit vorgesehen ist, die Funktionen der Lufttrocknereinheit und der Kompressorkupplungsschaltventileinheit steuert beziehungsweise regelt. Die elektronische Steuereinheit kann folglich sämtliche Funktionen, die mit der Druckluftversorgung und insbesondere mit der Drucklufteinsparung in Verbindung stehen, steuern. Dies betrifft zunächst die Kernfunktionen der Lufttrocknereinheit, nämlich die Luftaufbereitung, die Möglichkeit der Regeneration und eine Druckreglerfunktion. Die Förderphasen und Nicht-Förderphasen der Druckluftversorgungsanlage können von zahlreichen Parametern abhängig gemacht werden, deren Werte allesamt der elektronischen Steuereinheit zur Verfügung stehen. Folglich können optimierte Arbeitsverfahren zur Verfügung gestellt werden.
Die Erfindung baut auf der gattungsgemäßen Druckluftversorgungsanlage dadurch auf, dass eine weitere elektrisch ansteuerbare Ventileinheit vorgesehen ist und dass eine durch die weitere elektrisch ansteuerbare Ventileinheit pneumatisch ansteuerbare Förderleitungsabschaltventileinheit vorgesehen ist. Im Hinblick auf die Energieeinsparung kann über die elektrisch ansteuerbaren Ventileinheiten in der Lufttrocknereinheit mittelbar ein Förderleitungsabschaltventil pneumatisch betätigt werden, wobei diese Betätigung auf das Vorliegen einer Förderphase beziehungsweise einer Nichtförderphase eines über eine Kupplung mit einem Verbrennungsmotor gekoppelten Kompressors abgestimmt ist.

Erfindungsgemäß ist weiterhin vorgesehen, dass die Ablassventileinheit durch die weitere elektrisch ansteuerbare Ventileinheit pneumatisch ansteuerbar ist. Die Ablassventileinheit wird somit von demselben elektrisch ansteuerbaren Ventil angesteuert, wie die Förderleitungsabschaltventileinheit. Folglich kommt es immer zu einem Verschließen der Förderleitungsabschaltventileinheit, wenn die Ablassventileinheit geöffnet wird. Dies stellt ein Vermeiden des Förderleitungsvolumenverlustes in jedem Fall sicher, macht jedoch eine Systemdruckerhöhung erforderlich, wenn das Förderleitungsvolumen zum Zwecke des Einfrierschutzes ausgetauscht werden soll.

Nützlicherweise ist vorgesehen, dass die elektronische Steuereinheit geeignet ist, die Druckluftversorgungsanlage in einen Energiespar-Betriebszustand zu überführen, bei dem die Kompressorkupplungsschaltventileinheit die Kompressorkupplung trennt. Der Kompressor wir zur Erzielung einer Energieeinsparung also nicht mehr angetrieben.

Insbesondere kann vorgesehen sein, dass die elektronische Steuereinheit geeignet ist, die Druckluftversorgungsanlage in einen Regenerations-Betriebszustand zu überführen, bei dem die Kompressorkupplungsschaltventileinheit die Kompressorkupplung trennt, die elektrisch ansteuerbare Ventileinheit angesteuert wird und die pneumatisch ansteuerbare Ablassventileinheit eine Ablassleitung öffnet. Die Energieeinsparung kann also auch während der Regenerationsphase der Druckluftversorgungsanlage aufrechterhalten werden.

Weiterhin kann vorgesehen sein, dass die Förderleitungsabschaltventileinheit die Förderleitung in dem Energiespar-Betriebszustand schließt. Durch das Schließen der Förderleitung wird verhindert, dass die in der Förderleitung befindliche Druckluft verloren geht.

Ebenfalls ist es nützlich, dass die Förderleitungsabschaltventileinheit die Förderleitung in dem Regenerations-Betriebszustand schließt. Die Einsparung der in der Förderleitung befindlichen Druckluft kann also auch während der Regenerationsphase der Druckluftversorgungsanlage aufrechterhalten werden.

Weiterhin kann vorgesehen sein, dass die elektronische Steuereinheit geeignet ist, die Druckluftversorgungsanlage in einen Förderlufterneuerungs-Betriebszustand zu überführen, bei dem die Kompressorkupplung geschlossen ist, die Förderleitungsabschaltventileinheit die Förderleitung öffnet und die pneumatisch ansteuerbare Ablassventileinheit eine Ablassleitung öffnet. Ein solcher Vorgang ist nützlich, um ein Einfrieren der Förderleitung zu verhindern.

Daher ist es von besonderem Vorteil, dass der Förderlufterneuerungs-Betriebszustand insbesondere dann einnehmbar ist, wenn ein mit der elektronischen Steuerung verbundener Temperatursensor einen für die Außentemperatur charakteristischen Wert liefert, der unterhalb eines Schwellenwertes liegt.

In nicht beanspruchter Weise kann vorgesehen sein, dass die Ablassventileinheit durch die elektrisch ansteuerbare Ventileinheit pneumatisch ansteuerbar ist. Dadurch kann die Förderleitungsabschaltventileinheit gezielt ohne sonstige Beeinflussung des Systems angesteuert werden, während die Ablassventileinheit immer dann geöffnet wird, wenn die zweite elektrisch ansteuerbare Ventileinheit bestromt wird. Da die zweite elektrisch ansteuerbare Ventileinheit insbesondere zum Durchführen einer Regenerierung der Lufttrocknereinheit bestromt wird und da es hierbei ohnehin erforderlich ist, das Ablassventil zu öffnen, liegt eine schaltungstechnisch einfache Variante vor. Es ist allerdings zu berücksichtigen, dass, wenn die Druckluft in der Förderleitung erneuert werden soll, ebenfalls ein Öffnen des Ablassventils erforderlich ist. Es wird dann also zumindest zu einer kurzfristigen Regeneration der Filtereinheit kommen, auch wenn dies eventuell nicht erforderlich ist. Es ist erkennbar, dass beide Ansteuerungsvarianten der Ablassventileinheit, das heißt entweder durch das erste elektrisch ansteuerbare Ventil oder durch das zweite elektrisch ansteuerbare Ventil, Vor- und Nachteile zeigen, wobei im konkreten Einsatzfall die eine oder andere Variante zu bevorzugen ist.

Nützlicherweise kann vorgesehen sein, dass die Ablassventileinheit einen Steuerkolben aufweist, der bei Belüftung eines Steuerraums ein Ablassventil öffnet, wobei zusätzlich eine 2/2-Wegeventilfunktion zum Sperren beziehungsweise Freigeben eines Regenerationsluftpfades vorgesehen ist. Wenn die Umschaltung des Ablassventils von der Schaltungslogik her stets mit dem Durchführen einer Regeneration gekoppelt ist, bietet sich eine solche integrierende Auslegung eines Ventils mit mehreren Funktionen an, wobei alle Funktionen durch Belüftung eines einzigen Steuerraums realisiert werden können.

Die Erfindung betrifft ein Verfahren gemäß dem Oberbegriff von Anspruch 9, wobei die Funktionen der Lufttrocknereinheit und der Kompressorkupplungsschaltventileinheit durch eine elektronische Steuereinheit gesteuert beziehungsweise geregelt werden. Auf diese Weise werden die Vorteile und Besonderheiten der erfindungsgemäßen Druckluftversorgungsanlage auch im Rahmen eines Verfahrens realisiert. Dies gilt auch für die nachfolgend angegebenen besonders bevorzugten Ausführungsformen des erfindungsgemäßen Verfahrens.

Die Erfindung baut auf dem gattungsgemäßen Verfahren dadurch auf, dass eine weitere elektrisch ansteuerbare Ventileinheit vorgesehen ist und dass eine durch die weitere elektrisch ansteuerbare Ventileinheit pneumatisch ansteuerbare Förderleitungsabschaltventileinheit vorgesehen ist.

Erfindungsgemäß ist weiterhin vorgesehen, dass die Ablassventileinheit durch die weitere elektrisch ansteuerbare Ventileinheit pneumatisch angesteuert wird.

Dieses ist in nützlicher Weise dadurch weitergebildet, dass die elektronische Steuereinheit die Druckluftversorgungsanlage in einen Energiespar-Betriebszustand überführt, bei dem die Kompressorkupplungsschaltventileinheit die Kompressorkupplung trennt.

Insbesondere kann vorgesehen sein,dass die elektronische Steuereinheit die Druckluftversorgungsanlage in einen Regenerations-Betriebszustand überführt, bei dem die Kompressorkupplungsschaltventileinheit die Kompressorkupplung trennt, die zweite elektrisch ansteuerbare Ventileinheit angesteuert wird und die pneumatisch ansteuerbare Ablassventileinheit eine Ablassleitung öffnet.

Dann kann vorgesehen sein, dass die Förderleitungsabschaltventileinheit die Förderleitung in dem Energiespar-Betriebszustand schließt.

Weiterhin ist es möglich, dass die Förderleitungsabschaltventileinheit die Förderleitung in dem Regenerations-Betriebszustand schließt.

Das erfindungsgemäße Verfahren ist insbesondere dann in nützlicher Weise weitergebildet, dass die elektronische Steuereinheit die Druckluftversorgungsanlage in einen Förderlufterneuerungs-Betriebszustand überführt, bei dem die Kompressorkupplung geschlossen ist, die Förderleitungsabschaltventileinheit die Förderleitung öffnet und die pneumatisch ansteuerbare Ablassventileinheit eine Ablassleitung öffnet.

In diesem Zusammenhang ist es von Vorteil, dass der Förderlufterneuerungs-Betriebszustand insbesondere dann eingenommen wird, wenn ein mit der elektronischen Steuerung verbundener Temperatursensor einen für die Außentemperatur charakteristischen Wert liefert, der unterhalb eines Schwellenwertes liegt.

Weiterhin ist vorgesehen, dass die elektronische Steuerung die Übergänge zwischen Förderzustand und Energiespar-Betriebszustand auf der Grundlage einer vorgegebenen Einschaltdruckschwelle und einer vorgegebenen Abschaltdruckschwelle steuert, wobei die Abschaltdruckschwelle einem größeren Druck als die Einschaltdruckschwelle entspricht. Ob eine Förderphase oder eine Nicht-Förderphase von Druckluft vorliegt, wird also vom vorliegenden Systemdruck abhängig gemacht.

Insbesondere ist vorgesehen, dass die elektronische Steuereinheit die Druckluftversorgungsanlage in einen Förderzustand überführt, wenn ein druckluftverbraucherseitig erfasster Druck eine Einschaltdruckschwelle unterschreitet.

Weiterhin ist es nützlich, dass die elektronische Steuereinheit die Druckluftversorgungsanlage in den Energiespar-Betriebszustand überführt, wenn ein druckluftverbraucherseitig erfasster Druck eine Abschaltdruckschwelle überschreitet.

Von besonderem Vorteil ist, dass die elektronische Steuereinheit die Druckluftversorgungsanlage in einen Förderzustand überführt, wenn sich das Nutzfahrzeug in einer Schubbetriebsphase befindet und wenn ein druckluftverbraucherseitig erfasster Druck zwischen einer Einschaltdruckschwelle und einer Abschaltdruckschwelle liegt. Es ist also möglich, die erfindungsgemäße Druckluftversorgungseinrichtung auch dann in einen Förderzustand zu überführen, wenn die Einschaltdruckschwelle noch gar nicht erreicht ist, nämlich dann, wenn sich das Fahrzeug in einer Schubphase befindet. Die während der Schubphase meist durch Bremsungen in Wärmeenergie umgewandelte und damit nutzlos gemachte Energie wird auf diese Weise in einen erhöhten Druckluftvorrat umgesetzt. Besonders nützlich ist es, die zusätzliche Druckluftförderung oberhalb der Einschaltdruckschwelle dann vorzunehmen, wenn ein baldiger erhöhter Druckluftbedarf zu erwarten ist.

Es ist besonders zu bevorzugen, dass die Abschaltdruckschwelle erhöht wird, wenn sich das Nutzfahrzeug in einer Schubbetriebsphase befindet. Das Erhöhen der Abschaltdruckschwelle kann sowohl dann sinnvoll sein, wenn der Kompressor aufgrund eines Unterschreitens der Einschaltdruckschwelle in die Förderphase übergegangen ist, als auch dann, wenn die Förderphase ohne Unterschreitung der Einschaltschwelle begonnen wurde.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung einer ersten Ausführungsform einer erfindungsgemäßen Druckluftversorgungsanlage;
- Figur 2: eine schematische Darstellung einer zweiten Ausführungsform einer nicht beanspruchten Druckluftversorgungsanlage;
- Figur 3: einen schematischen Axialschnitt durch eine Ventileinheit, die im Zusammenhang mit der vorliegenden Erfindung vorteilhaft zum Einsatz kommen kann, sowie ein erstes Ensemble damit in Verbindung stehender Komponenten;
- Figur 4: eine schematische Darstellung eines Beispiels für eine Druckluftversorgungsanlage;
- Figur 5: eine schematische Darstellung eines weiteren Beispiels für eine Druckluftversorgungsanlage;
- Figur 6: einen schematischen Axialschnitt durch eine Ventileinheit, die im Zusammenhang mit der vorliegenden Erfindung vorteilhaft zum Einsatz kommen kann, sowie ein zweites Ensemble damit in Verbindung stehender Komponenten;
- Figur 7: ein Flussdiagramm zur Erläuterung eines ersten Betriebsverfahrens einer erfindungsgemäßen Druckluftversorgungseinrichtung und
- Figur 8: ein Flussdiagramm zur Erläuterung eines zweiten Betriebsverfahrens einer erfindungsgemäßen Druckluftversorgungseinrichtung.

Bei der nachfolgenden Beschreibung der Zeichnungen bezeichnen gleiche Bezugszeichen gleiche oder vergleichbare Komponenten.

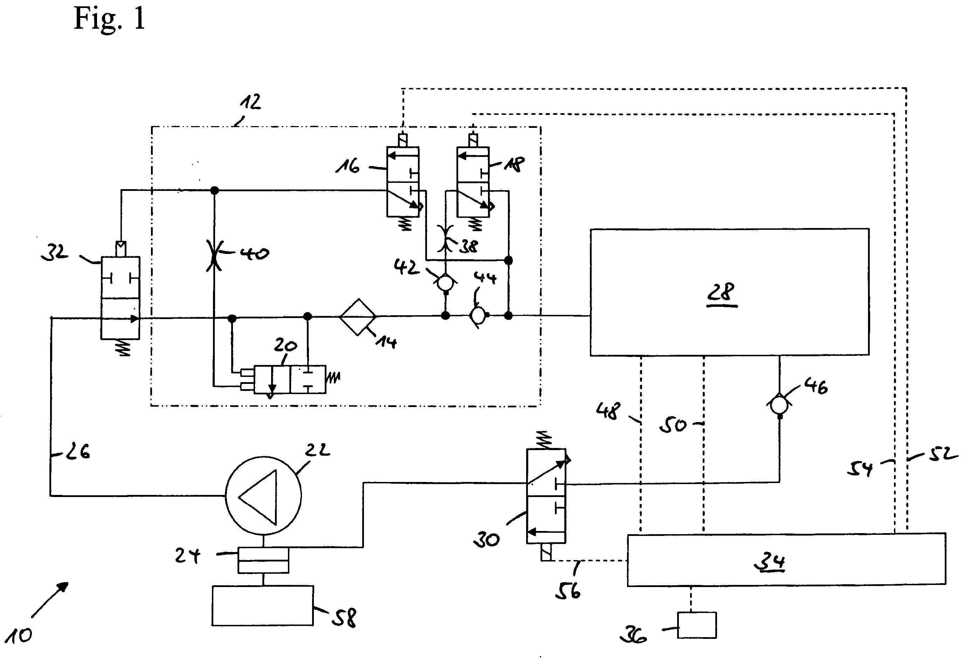

Figur 1 zeigt eine schematische Darstellung einer ersten Ausführungsform einer erfindungsgemäßen Druckluftversorgungsanlage. Die Druckluftversorgungsanlage 10 umfasst als wesentliche Komponenten eine Lufttrocknereinheit 12, eine Mehrkreisschutzventileinheit 28, einen Kompressor 22 mit Kupplung 24, eine Kompressorkupplungsschaltventileinheit 30 und eine in einer Förderleitung 26 zwischen dem Kompressor 22 und der Lufttrocknereinheit 12 angeordnete Förderleitungsabschaltventileinheit 32. Die Lufttrocknereinheit 12 umfasst pneumatisch und elektrisch ansteuerbare Komponenten, wobei aber die elektronische Steuereinheit 34, die unter anderem der Ansteuerung der in der Lufttrocknereinheit 12 vorgesehenen elektrisch ansteuerbaren Komponenten dient, extern angeordnet ist. Als Lufttrocknereinheit 12, die systematisch zwischen einer rein pneumatischen Lufttrocknereinheit und einer voll integrierten elektronischen Luftaufbereitungsanlage (EAC) anzusiedeln ist, wird eine solche Lufttrocknereinheit auch als Semitrockner bezeichnet. Die Lufttrocknereinheit 12 enthält eine erste elektrisch ansteuerbare Ventileinheit 16, die als 3/2-Wegeventil ausgebildet ist, eine zweite elektrisch ansteuerbare Ventileinheit 18, die ebenfalls als 3/2-Wegeventil ausgebildet ist, und eine pneumatisch ansteuerbare Ablassventileinheit 20, die als 2/2-Wegeventil ausgelegt ist. Die zweite elektrisch ansteuerbare Ventileinheit 18 wird im Rahmen der vorliegenden Offenbarung auch schlicht als elektrisch ansteuerbare Ventileinheit beziehungsweise elektrisch ansteuerbares Ventil bezeichnet, während die erste elektrisch ansteuerbare Ventileinheit auch die Bezeichnung "weitere Ventileinheit" beziehungsweise "weiteres Ventil" erhält. Weiterhin ist innerhalb der Lufttrocknereinheit 12 eine Filtereinheit 14 vorgesehen. Als weitere Komponenten sind zwei Drosseln 38, 40 sowie zwei Rückschlagventile 42, 44 zu nennen. Die Lufttrocknereinheit 12 steht ausgangsseitig mit einer Mehrkreisschutzventileinheit 28 in Verbindung, in der insbesondere Überströmventile vorgesehen sind, um die verschiedenen Druckluftverbraucherkreise gegeneinander abzusichern und eine vorgegebene Füllreihenfolge sicherzustellen. Die Mehrkreisschutzventileinheit 28 hat mehrere Druckluftausgänge, wobei nur der Druckluftausgang dargestellt ist, der über ein Rückschlagventil 46 zu einer als 3/2-Wegeventil ausgelegten Kompressorkupplungsschaltventileinheit 30 führt. Die Kompressorkupplungsschaltventileinheit 30 steht dann wiederum mit der Kompressorkupplung 24 in Verbindung, so dass die Kompressorkupplung 24 je nach Schaltzustand der Kompressorkupplungsschaltventileinheit 30 gekoppelt oder getrennt sein kann. Die elektronische Steuereinheit 34 erhält verschiedene Eingangssignale, beispielsweise von Drucksensoren, die in der Mehrkreisschutzventileinheit 28 eingebaut sind. Entsprechende Signalleitungen 48, 50 sind beispielhaft dargestellt. Die elektronische Steuereinheit 34 erhält weiterhin Temperaturinformationen von einem Temperatursensor 36. Über an Ausgangssignalanschlüssen der Steuereinheit 34 angeschlossene Signalleitungen 52, 54, 56 werden die erste elektrisch ansteuerbare Ventileinheit 16, die zweite elektrisch ansteuerbare Ventileinheit 18 und die Kompressorkupplungsschaltventileinheit 30 angesteuert.

Die in Figur 1 gezeigten Ventilstellungen liegen während einer normalen Förderphase der Druckluftversorgungsanlage vor. In dieser Förderphase koppelt die Kompressorkupplung 24 den Kompressor 22 mit dem Verbrennungsmotor 58 des Nutzfahrzeugs, so dass Druckluft über die Förderleitung 26 und die Förderleitungsabschaltventileinheit 32 in die Lufttrocknereinheit 12 gefördert wird. Die Druckluft durchströmt weiter die Filtereinheit 14 sowie das Rückschlagventil 44, um dann der Mehrkreisschutzventileinheit 28 zu geleitet zu werden, von wo aus die Druckluft den einzelnen Verbraucherkreisen zur Verfügung gestellt werden kann. Wird nun durch Druckmessung, beispielsweise vermittelt durch die Signalleitungen 48, 50, festegestellt, dass eine Abschaltdruckschwelle erreicht ist, so veranlasst die Steuereinheit 34 ein Umschalten der Kompressorkupplungsschaltventileinheit 30. Hierdurch wird ein Steuereingang der Kompressorkupplung 24 über das Rückschlagventil 46 mit einem Druckluftausgang des Mehrkreisschutzventils 28 verbunden, so dass ein Trennen der Kompressorkupplung 24 erfolgt. Die Druckluftversorgungsanlage tritt somit in einen Energiespar-Betriebszustand ein. Weiterhin kann durch Umschalten der ersten elektrisch ansteuerbaren Ventileinheit 16 innerhalb der Lufttrocknereinheit 12 veranlasst werden, dass die Ablassventileinheit 20 öffnet. Gleichzeitig wird durch das Umschalten der ersten elektrisch ansteuerbaren Ventileinheit 16 aber auch die Förderleitungsabschaltventileinheit 32 umgeschaltet, so dass die Förderleitung 26 von der Lufttrocknereinheit 12 getrennt wird. Folglich bleibt der Druck in der Förderleitung 26 trotz geöffnetem Ablassventil 20 erhalten. Ausgehend von diesem Zustand kann bei Bedarf eine Regeneration der Filtereinheit 14 erfolgen, indem nämlich die zweite elektrisch ansteuerbare Ventileinheit 18 der Lufttrocknereinheit 12 umgeschaltet wird. Ein Umschalten dieser Ventileinheit 18 stellt eine Umgehung des Rückschlagventils 44 über das Rückschlagventil 42 zur Verfügung, so dass Druckluft aus den Verbraucherkreisen über das Mehrkreisschutzventil 28, die zweite elektrisch ansteuerbare Ventileinheit 18, das Rückschlagventil 42, die Filtereinheit 14 und das Ablassventil 20 abströmen kann. Ein weiterer Betriebszustand kann in Abhängigkeit der von dem Temperatursensor 36 ermittelten Temperatur eingenommen werden. Um zu verhindern, dass die in der Förderleitung 26 vorhandene feuchte Druckluft zum Einfrieren der Förderleitung und/oder der Förderleitungsabschaltventileinheit 32 führt, ist bei niedrigen Temperaturen diese Druckluft von Zeit zu Zeit zu erneuern. Dies wird dadurch erreicht, dass trotz fehlendem Druckluftbedarf der Kompressor 22 in seine Förderphase überführt und die Förderleitungsabschaltventileinheit 32 in ihre Durchlassstellung überführt werden. Da das Ablassventil 20 in diesem Zustand zwangsläufig aufgrund seiner parallelen Ansteuerung zur Förderleitungsabschaltventileinheit 32 geschlossen ist, fördert der Kompressor 22 unter Erhöhung des Systemdrucks. Folglich geht während dieser kurzzeitigen Erneuerung des Förderleitungsvolumens keine Druckluft verloren. Im Zusammenhang mit der Ausführungsform gemäß Figur 1 ist aber zu erwähnen, dass bei dem Eintritt in die Nichtförderphase aufgrund des damit einhergehenden Umschaltens der Ablassventileinheit 20 in jedem Fall das Luftvolumen zwischen der Förderleitungsabschaltventileinheit 32 und dem Rückschlagventil 44 drucklos wird; insbesondere geht also der in der Filtereinheit 14 gespeicherte Druck verloren.

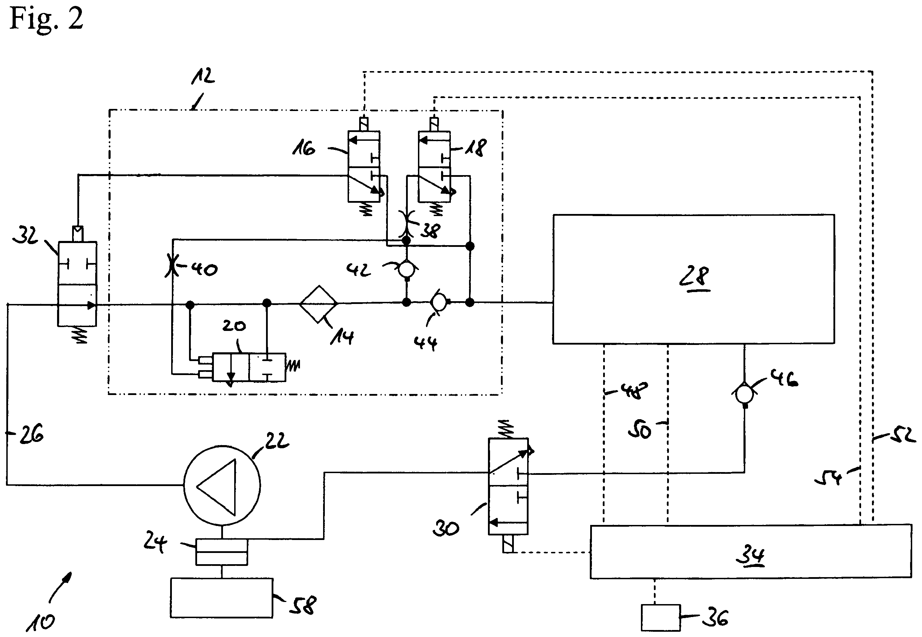

Figur 2 zeigt eine schematische Darstellung einer nicht beanspruchten Druckluftversorgungsanlage. Die hier dargestellte Druckluftversorgungsanlage 10 entspricht in vielen Einzelheiten der im Zusammenhang mit Figur 1 beschriebenen Anlage. Lediglich die pneumatische Ansteuerung der Ablassventileinheit im Hinblick auf die elektrisch ansteuerbaren Ventileinheiten 16, 18 ist unterschiedlich. Die Ablassventileinheit 20 wird gemäß Figur 2 nämlich durch die zweite elektrisch ansteuerbare Ventileinheit 18 geschaltet, das heißt stets im Zusammenhang mit einer Regeneration der Filtereinheit 14. Dies hat im Vergleich zu der Anlage gemäß Figur 1 den Vorteil, dass in der Nichtförderphase nicht nur das Druckluftvolumen in der Förderleitung 26 erhalten bleibt, sondern auch das Druckluftvolumen das zwischen der Förderleitungsabschaltventileinheit 32 und dem Rückschlagventil 44 gespeichert ist. Erst wenn einer Regeneration durch Umschalten der zweiten elektrisch ansteuerbaren Ventileinheit 18 eingeleitet wird, erfolgt ein Öffnen des Ablassventils 20, und es findet der in diesem Fall erwünschte Druckverlust statt. Ist das Volumen in der Förderleitung 26 aufgrund niedriger Temperaturen zu erneuern, so muss die Förderleitungsabschaltventileinheit 32 in ihre geöffnete Stellung überführt werden, der Kompressor 22 muss in Betrieb genommen werden und es ist erforderlich, das Ablassventil 20 durch umschalten der zweiten elektrisch ansteuerbaren Ventileinheit 18 zu schalten. Daher kommt es unweigerlich zu einer kurzzeitigen Regeneration, auch wenn dies eventuell gar nicht erforderlich ist. Eine solche kurzzeitige Regeneration kann aber in Kauf genommen werden, da durch die Entkopplung der Schaltvorgänge der Förderleitungsabschaltventileinheit 32 und der Ablassventileinheit 20 eine beträchtliche Einsparung von Druckluft während der Nicht-Förderphase erzielbar ist.

Bei der Druckluftversorgungsanlage gemäß Figur 2 erfüllt die Förderleitungsabschaltventileinheit 32 insbesondere während der Regenerationsphasen der Druckluftversorgungsanlage 10 ihren Zweck. Dann wird nämlich das Ablassventil 20 geöffnet, was ohne Förderleitungsabschaltventileinheit 32 zu einem Druckverlust in der Förderleitung 26 führen würde. Es ist also denkbar, die Förderleitungsabschaltventileinheit 32 erst dann in ihren die Förderleitung 26 sperrenden Zustand zu überführen, wenn eine Regeneration ansteht oder eingeleitet wird, denn außerhalb der Regenerationsphasen ist der Druckpfad zwischen dem Kompressor 22 und dem Rückschlagventil 44 abgeschlossen. Demnach ist es sogar möglich, auf die erste elektrisch ansteuerbare Ventileinheit 16 ganz zu verzichten und auch die Förderleitungsabschaltventileinheit 32 über die zweite elektrische ansteuerbare Ventileinheit anzusteuern. In diesem Fall würde der Übergang aus der Förderphase in die Nicht-Förderphase ausschließlich dadurch herbeigeführt, dass die Kompressorkupplungsschaltventileinheit 30 umgeschaltet würde, um so den Kompressor 22 außer Betrieb zu setzen. Insbesondere bliebe die Förderleitungsabschaltventileinheit 32 geöffnet. Erst wenn eine Regeneration stattfinden soll, wird die zweite elektrisch ansteuerbare Ventileinheit 18 umgeschaltet, was ein Absperren der Förderleitung 26 durch die Förderleitungsabschaltventileinheit 32 und ein Öffnen des Ablassventils 20 zur Folge hätte.

In Figur 2 schließt die Steuerdruckverbindung zum Ablassventil 20 zwischen der Drossel und dem Rückschlagventil 42 an. Es ist ebenso möglich, dass diese Verbindung zwischen der Drossel 38 und der Ventileinheit 18 angeordnet ist.

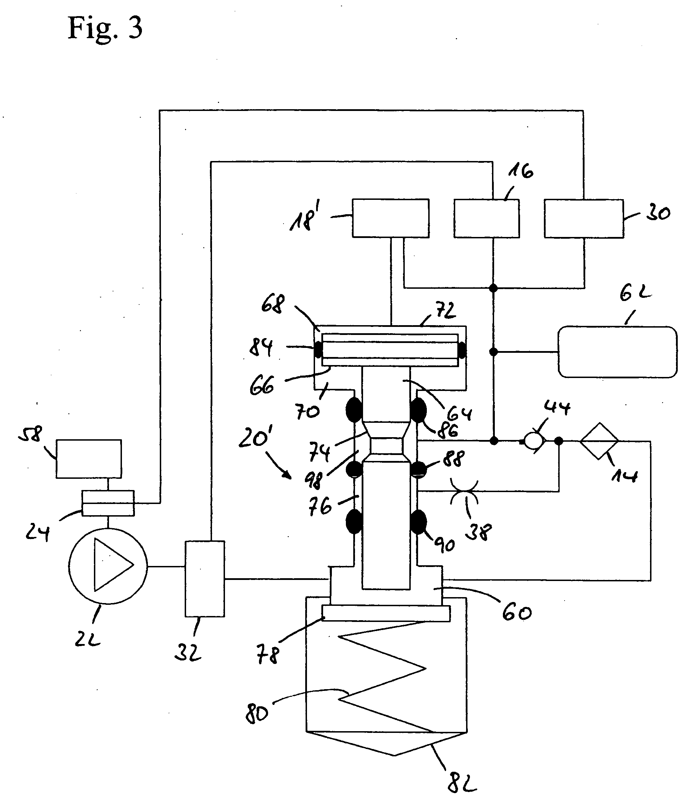

Figur 3 zeigt einen schematischen Axialschnitt durch eine Ventileinheit, die im Zusammenhang mit der vorliegenden Erfindung vorteilhaft zum Einsatz kommen kann, sowie ein erstes Ensemble damit in Verbindung stehender Komponenten. Mit dem hier dargestellten Ablassventil 20' lassen sich die Ablassfunktion und die Bereitstellung eines Regenerationsluftpfades in besonderer Weise kombinieren. Im Hinblick auf die Schaltlogik entspricht die in Figur 3 dargestellte Schaltung derjenigen aus Figur 2, das heißt die Ablassfunktion und die Regenerationsfunktion sind zwingend miteinander gekoppelt, während das Umschalten der Förderleitungsabschaltventileinheit 32 hiervon vollkommen unabhängig erfolgen kann. Im dargestellten Schaltzustand kann eine Förderung von Druckluft von dem Kompressor 22 über die Förderleitungsabschaltventileinheit 32 erfolgen. Die so geförderte Druckluft durchströmt eine Ventilkammer 60 der Ablassventileinheit 20' und von dort über die Filtereinheit 14 und das Rückschlagventil 44 zu den Verbrauchern, die hier durch einen Druckluftbehälter 62 symbolisiert sind, wobei selbstverständlich noch eine Mehrkreisschutzventileinrichtung zwischengeschaltet sein kann. Der stromabwärts vom Rückschlagventil 44 vorliegende Systemdruck kann dann von der Kompressorkupplungsschaltventileinheit 30, der ersten elektrisch ansteuerbaren Ventileinheit 16 und der zweiten elektrisch ansteuerbaren Ventileinheit 18' zur Bereitstellung von Steuerdrücken für die Kompressorkupplung 24, die Förderleitungsabschaltventileinheit 32 und die Ablassventileinheit 20' genutzt werden. Die Ablassventileinheit 20' umfasst einen Steuerkolben. Eine endständige Steuerkolbenplatte 66 trennt einen mit der zweiten elektrisch ansteuerbaren Ventileinheit 18' verbundenen Steuerraum 68 mittels einer Dichtung 84, die mit einem Ventilgehäuse 72 zusammenwirkt von einem Rückraum 70. Der Rückraum 70 enthält eine nicht dargestellte Entlüftungsöffnung, um ein unbehindertes Verschieben des Steuerkolbens 64 zu gestatten. Der Steuerkolben 64 weist weiterhin eine Einschnürung 74 auf, wobei der Steuerkolben auf beiden Seiten der Einschnürung 74 mittels Dichtungen 86, 88 gegen die benachbarten, den Steuerkolben 64 umgebenden Räume abgedichtet ist. Die die Einschnürung 74 umgebende Ventilkammer ist somit gegen den Rückraum 70 der Steuerkolbenplatte 66 sowie gegen einen weiteren Zwischenventilraum 76 abgedichtet. Dieser Zwischenventilraum 76 ist von der bereits erwähnten Ventilkammer 60 mittels einer weiteren Dichtung 90 getrennt. Die Ventilkammer 60 wird durch einen Ventilteller 78 begrenzt, der durch eine Feder 80 auf einen Ventilsitz gepresst wird. Auf diese Weise dichtet der Ventilteller 78 die Ventilkammer 60 gegen einen Ablass 82 ab. Insgesamt enthält das Ablassventil 20' somit fünf Dichtungen, nämlich den mit dem Ventilteller 78 zusammenwirkenden Ventilsitz sowie die als O-Ringe realisierten Dichtungen 84, 86, 88, 90, die mit dem Ventilgehäuse 72 zusammenwirken und Steuerraum 68, Rückraum 70, den die Einschnürung 74 umgebenden Raum, Zwischenventilraum 76 und Ventilkammer 60 gegeneinander abdichten. In dem in Figur 3 dargestellten Schaltzustand entlüftet die zweite elektrisch ansteuerbare Ventileinheit 18' den Steuerraum 68. Der Ventilteller 78 dichtet die Ventilkammer 60 gegen den Ablass 82 ab, und die Dichtung 88 dichtet den Bereich stromabwärts des Rückschlagventils 44, dass heißt die Druckluftverbraucherseite, gegen den mit einer Drossel 38 versehenen Luftpfad zur Filtereinheit 14 ab. Wird die zweite elektrisch ansteuerbare Ventileinheit 18 nun angesteuert, so dass der Steuerraum 38 belüftet wird, verschiebt die den Steuerkolben 64. Das hat zur Folge, dass der Steuerkolben einerseits den Ventilteller 78 von dem Ventilsitz abhebt, so dass die Ventilkammer 60 mit dem Ablass 82 verbunden ist, und das andererseits der die Einschnürung 74 umgebende Raum nun eine Verbindung zwischen der Verbraucherseite, dass heißt im Bereich stromabwärts des Rückschlagventils 44 und der Filtereinheit 14 zur Verfügung stellt. Da der Ablass in diesem Zustand geöffnet ist, kann ein Rückströmen von Druckluft von der Verbraucherseite über die Filtereinheit zum Ablass erfolgen. Das Ablassventil 20' kombiniert insofern die Ablassfunktion mit einer 2/2-Wegeventilfunktion zur Bereitstellung eines Regenerationsluftpfades. Gemäß dem vorliegenden Ausführungsbeispiel ist diese 2/2-Wegeventilfunktion durch eine Einschnürung realisiert. Ebenfalls ist es möglich, Bohrungen vorzusehen, die verschiedene Räume um den Steuerkolben 64 in Abhängigkeit von der Stellung des Steuerkolbens 64 miteinander verbinden oder gegeneinander abdichten.

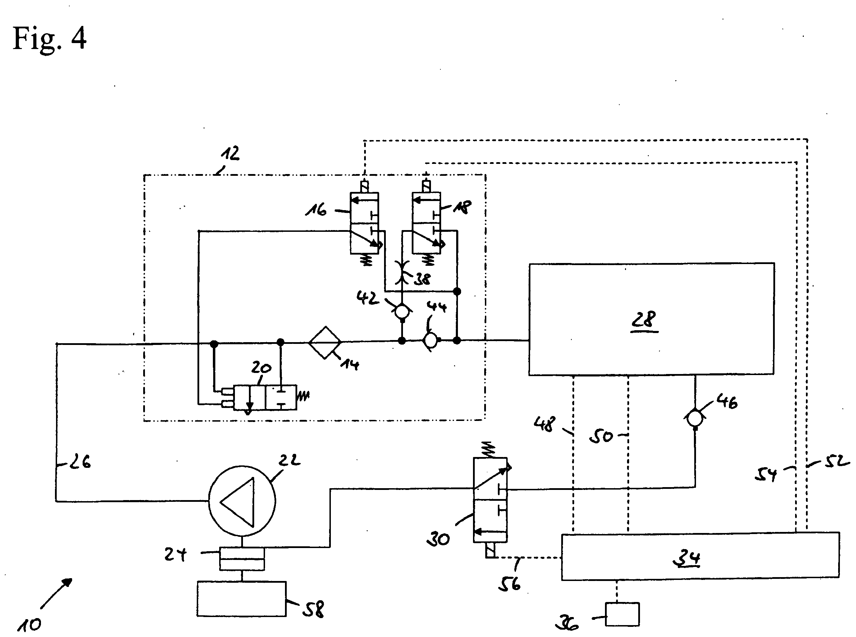

Figur 4 zeigt eine schematische Darstellung eines Beispiels für eine Druckluftversorgungsanlage. Im Unterschied zu der erfindungsgemäßen Ausführungsform gemäß Figur 1 ist hier keine Förderleitungsabschaltventileinheit 32 vorgesehen. Dementsprechend ist auch die in Figur 1 mit Bezugszeichen 40 gekennzeichnete Drossel in der Steuerleitung des Ablassventils 20 entbehrlich. Die erste elektrisch ansteuerbare Ventileinheit 16 dient daher ausschließlich zur Ansteuerung des Ablassventils 20.

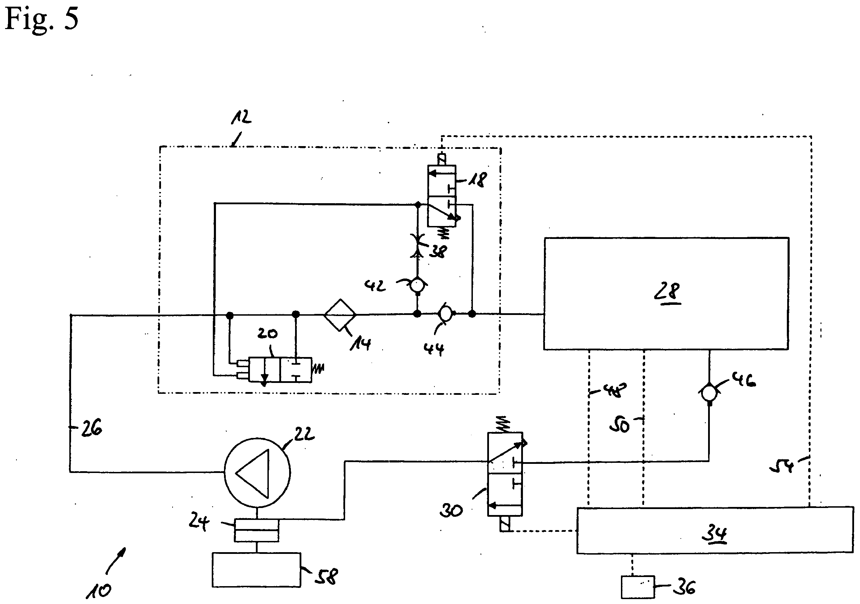

Figur 5 zeigt eine schematische Darstellung eines weiteren Beispiels für eine Druckluftversorgungsanlage. Im Unterschied zu der Druckluftversorgungsanlage gemäß Figur 2 ist keine Förderleitungsabschaltventileinheit vorgesehen. Dementsprechend kann die in Figur 2 mit Bezugszeichen 16 gekennzeichnete elektrisch ansteuerbare Ventileinheit vollständig entfallen, da diese gemäß Figur 2 ausschließlich der Ansteuerung der Förderleitungsabschaltventileinheit 32 dient. Die Lufttrocknereinheit 12 kommt also mit einer einzigen elektrisch ansteuerbaren Ventileinrichtung 18 aus.

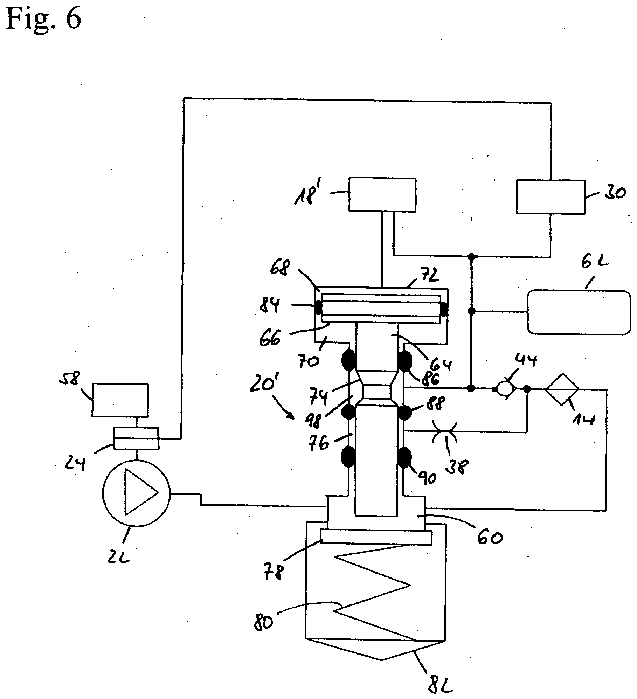

Figur 6 zeigt einen schematischen Axialschnitt durch eine Ventileinheit, die im Zusammenhang mit der vorliegenden Erfindung vorteilhaft zum Einsatz kommen kann, sowie ein erstes Ensemble damit in Verbindung stehender Komponenten. Bei der hier dargestellten Beschaltung des Ablassventils 20' fehlen im Vergleich zu der Beschaltung gemäß Figur 3 die dort mit Bezugszeichen 16 bezeichnete elektrisch ansteuerbare erste Ventileinheit sowie die in Figur 3 mit Bezugszeichen 32 bezeichnete Förderleitungsabschaltventileinheit.

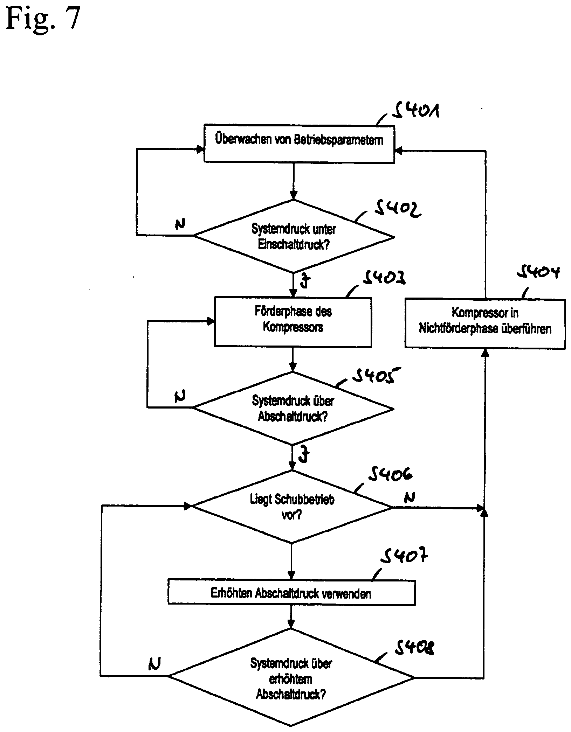

Figur 7 zeigt ein Flussdiagramm zur Erläuterung eines ersten Betriebsverfahrens einer erfindungsgemäßen Druckluftversorgungseinrichtung. Gemäß Schritt 401 werden Betriebsparameter des Nutzfahrzeugs überwacht, unter anderem der Systemdruck der Druckluftversorgungsanlage und das Vorliegen einer Schubphase. In Schritt S402 wird ermittelt, ob der Systemdruck unterhalb einer vorgegebenen Einschaltdruckschwelle liegt. Ist dies nicht der Fall, so wird die Überwachung der Betriebsparameter gemäß Schritt S401 fortgesetzt. Liegt der Systemdruck hingegen unterhalb der Einschaltdruckschwelle, so wird gemäß Schritt S403 verlasst, dass der Kompressor fördert. In Schritt S405 wird dann ermittelt, ob der Systemdruck oberhalb einer Abschaltdruckschwelle liegt, bei der im Normalfall der Förderzustand beendet wird. Liegt der Systemdruck noch unterhalb der Abschaltdruckschwelle, so wird die Förderphase des Kompressors gemäß Schritt S403 aufrechterhalten. Ist die Abschaltdruckschwelle überschritten, so wird nicht sogleich abgeschaltet, sondern es wird viel mehr in Schritt S406 überprüft, ob sich das Nutzfahrzeug in einer Schubphase befindet. Erst wenn festgestellt wird, dass keine Schubbetriebsphase vorliegt, so wird in Schritt S404 der Kompressor in eine Nichtförderphase überführt, woraufhin gemäß Schritt S401 das Überwachen von Betriebsparametern fortgesetzt wird. Liegt jedoch eine Schubbetriebsphase vor, so wird gemäß Schritt S407 die Abschaltdruckschwelle auf einen höheren Wert gesetzt, so dass die Förderphase des Kompressors länger anhalten kann. In Schritt S408 wird dann geprüft, ob der Systemdruck über der erhöhten Abschaltdruckschwelle liegt. Ist dies nicht der Fall, so wird mit der bereits beschriebenen Überprüfung, ob Schubbetrieb vorliegt, gemäß Schritt S406 fortgefahren. Erst wenn in Schritt 408 ermittelt wird, dass der Systemdruck sich nun oberhalb des erhöhten Abschaltdruckes befindet, wird gemäß Schritt S404 der Kompressor in seine Nichtförderphase überführt, und es wird in Schritt S401 die Überwachung von Betriebsparametern fortgesetzt.

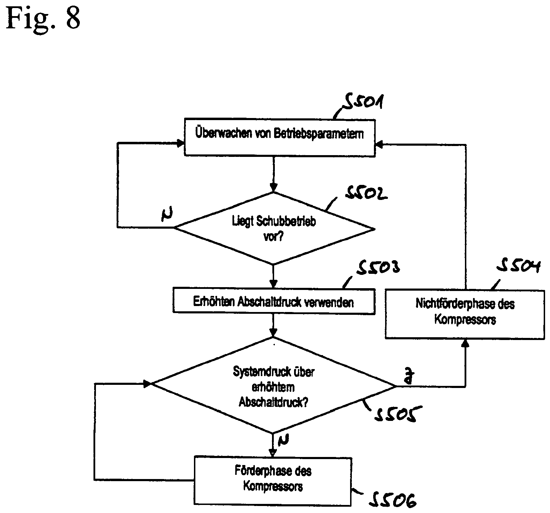

Figur 8 zeigt ein Flussdiagramm zur Erläuterung eines zweiten Betriebsverfahrens einer erfindungsgemäßen Druckluftversorgungseinrichtung. Während bei dem im Zusammenhang mit Figur 7 beschriebenen Verfahren der Schubbetrieb nur dann in verbesserter Weise ausgenutzt wird, wenn ohnehin bereits eine Förderphase des Kompressors vorliegt, kann bei dem noch weiter verbesserten Verfahren gemäß Figur 8 jederzeit auf der Grundlage eines vorliegenden Schubbetriebs in die Förderphase eingetreten werden, so lange dann zu überprüfende Druckvoraussetzungen vorliegen. Im Einzelnen: Gemäß Schritt S501 wird wiederum von einer Überwachung der Betriebsparameter ausgegangen. In Schritt S402 wird dann unabhängig von den vorliegenden Druckverhältnissen geprüft, ob Schubbetrieb vorliegt. Ist dies nicht der Fall, so werden weiterhin die Betriebsparameter gemäß Schritt S501 überwacht. Liegt jedoch Schubbetrieb vor, so wird im nächsten Schritt S503 die Abschaltdruckschwelle erhöht. Dann wird in Schritt S505 geprüft, ob der Systemdruck oberhalb des erhöhten Abschaltdruckes liegt. Ist dies der Fall, so wird gemäß Schritt S504 die Nichtförderphase des Kompressors aufrechterhalten. Liegt der Systemdruck jedoch unterhalb der erhöhten Abschaltdruckschwelle, so wird gemäß Schritt S506 in die Förderphase des Kompressors eingetreten, wobei diese durch zyklisches Druchlaufen der Schritte S505 und S506 so lange aufrechterhalten bleibt, bis der Systemdruck über dem erhöhten Abschaltdruck liegt. Dann wird in die Nichtförderphase des Kompressors gemäß Schritt S504 eingetreten, und die Überwachung der Betriebsparameter gemäß Schritt S501 wird fortgesetzt. Das gemäß Figur 8 dargestellte Verfahren kann nur parallel zu anderen Überwachungsverfahren eingesetzt werden. Es ist nämlich zusätzlich in jedem Fall erforderlich, die Druckzustände im Fahrzeug zu überwachen und auf dieser Grundlage eine Förderphase des Kompressors gegebenenfalls einzuleiten.

### Bezugszeichenliste:

- 10: Druckluftversorgungsanlage
- 12: Lufttrocknereinheit
- 14: Filtereinheit
- 16: Ventileinheit
- 18: Ventileinheit
- 20: Ablassventileinheit
- 20': Ablassventileinheit
- 22: Kompressor
- 24: Kupplung
- 26: Förderleitung
- 28: Mehrkreisschutzventileinheit
- 30: Kompressorkupplungsschaltventileinheit
- 32: Förderleitungsabschaltventileinheit
- 34: Steuereinheit
- 36: Temperatursensor
- 38: Drossel
- 40: Drossel
- 42: Rückschlagventil
- 44: Rückschlagventil
- 46: Rückschlagventil
- 48: Signalleitung
- 50: Signalleitung
- 52: Signalleitung
- 54: Signalleitung
- 56: Signaleinheit
- 58: Verbrennungsmotor
- 60: Ventilkammer
- 62: Druckluftbehälter
- 64: Steuerkolben
- 66: Steuerkolbenplatte
- 68: Steuerraum
- 70: Rückraum
- 72: Ventilgehäuse
- 74: Einschnürung
- 76: Zwischenventilraum
- 78: Ventilteller
- 80: Feder
- 82: Ablass
- 84: Dichtung
- 86: Dichtung
- 88: Dichtung
- 90: Dichtung
- 94: Steuerkolben

## Patentansprüche

1. Druckluftversorgungsanlage (10) für ein Nutzfahrzeug, mit
- einer Lufttrocknereinheit (12) mit einer Filtereinheit (14), einer elektrisch ansteuerbaren Ventileinheit (18,18') und einer pneumatisch ansteuerbaren Ablassventileinheit (20,20'),
- einem Kompressor (22) mit Kupplung (24), welcher der Lufttrocknereinheit Druckluft über eine Förderleitung (26) liefert,
- einer Mehrkreisschutzventileinheit (28), die Druckluft von der Lufttrocknereinheit bezieht und
- einer elektrisch ansteuerbaren Kompressorkupplungsschaltventileinheit (30),
wobei eine elektronische Steuereinheit (34) vorgesehen ist, die Funktionen der Lufttrocknereinheit (12) und der Kompressorkupplungsschaltventileinheit (30) steuert, **dadurch gekennzeichnet, dass** eine weitere elektrisch ansteuerbare Ventileinheit (16) vorgesehen ist und dass eine durch die weitere elektrisch ansteuerbare Ventileinheit (16) pneumatisch ansteuerbare Förderleitungsabschaltventileinheit (32) vorgesehen ist, und dass die Ablassventileinheit (20, 20') durch die weitere elektrisch ansteuerbare Ventileinheit (16) pneumatisch ansteuerbar ist, so dass die Förderleitungsabschaltventileinheit (32) immer verschlossen wird, wenn die Ablassventileinheit (20, 20') geöffnet wird, und ein Förderleitungsvolumenverlust verhindert wird.

2. Druckluftversorgungsanlage (10) nach Anspruch 1, **dadurch gekennzeichnet, dass** die elektronische Steuereinheit (34) geeignet ist, die Druckluftversorgungsanlage (10) in einen Energiespar-Betriebszustand zu überführen, bei dem die Kompressorkupplungsschaltventileinheit (30) die Kompressorkupplung (24) trennt.

3. Druckluftversorgungsanlage (10) nach Anspruch 1 oder 2, **dadurch gekennzeichnet, dass** die elektronische Steuereinheit (34) geeignet ist, die Druckluftversorgungsanlage (10) in einen Regenerations-Betriebszustand zu überführen, bei dem die Kompressorkupplungsschaltventileinheit (30) die Kompressorkupplung (24) trennt, die elektrisch ansteuerbare Ventileinheit (18, 18')) angesteuert wird und die pneumatisch ansteuerbare Ablassventileinheit (20, 20') eine Ablassleitung öffnet.

4. Druckluftversorgungsanlage (10) nach Anspruch 1, 2 oder 3, **dadurch gekennzeichnet, dass** die Förderleitungsabschaltventileinheit (32) die Förderleitung (26) in dem Energiespar-Betriebszustand schließt.

5. Druckluftversorgungsanlage (10) nach Anspruch 1, 2, 3 oder 4, **dadurch gekennzeichnet, dass** die Förderleitungsabschaltventileinheit (32) die Förderleitung (26) in dem Regenerations-Betriebszustand schließt.

6. Druckluftversorgungsanlage (10) nach einem der Ansprüche 4 oder 5, **dadurch gekennzeichnet, dass** die elektronische Steuereinheit (34) geeignet ist, die Druckluftversorgungsanlage in einen Förderlufterneuerungs-Betriebszustand zu überführen, bei dem die Kompressorkupplung (24) geschlossen ist, die Förderleitungsabschaltventileinheit (32) die Förderleitung (26) öffnet und die pneumatisch ansteuerbare Ablassventileinheit (20, 20') eine Ablassleitung öffnet.

7. Druckluftversorgungsanlage (10) nach Anspruch 6, **dadurch gekennzeichnet, dass** der Förderlufterneuerungs-Betriebszustand insbesondere dann einnehmbar ist, wenn ein mit der elektronischen Steuerung (34) verbundener Temperatursensor (36) einen für die Außentemperatur charakteristischen Wert liefert, der unterhalb eines Schwellenwertes liegt.

8. Druckluftversorgungsanlage nach einem der vorhergehenden Ansprüche, **dadurch gekennzeichnet, dass** die Ablassventileinheit (20') einen Steuerkolben (64) aufweist, der bei Belüftung eines Steuerraums ein Ablassventil öffnet, wobei zusätzlich eine 2/2-Wegeventilfunktion zum Sperren beziehungsweise Freigeben eines Regenerationsluftpfades vorgesehen ist.

9. Verfahren zum Betreiben einer Druckluftversorgungsanlage (10) für ein Nutzfahrzeug, mit
- einer Lufttrocknereinheit (12) mit einer Filtereinheit (14), einer elektrisch ansteuerbaren Ventileinheit (18, 18') und einer pneumatisch ansteuerbaren Ablassventileinheit (20, 20'),
- einem Kompressor(22) mit Kupplung (24), welcher der Lufttrocknereinheit Druckluft über eine Förderleitung liefert,
- einer Mehrkreisschutzventileinheit (28), die Druckluft von der Lufttrocknereinheit bezieht,
- einer elektrisch ansteuerbaren Kompressorkupplungsschaltventileinheit (30),
wobei die Funktionen der Lufttrocknereinheit (12) und der Kompressorkupplungsschaltventileinheit (30) durch eine elektronische Steuereinheit (34) gesteuert werden, **dadurch gekennzeichnet, dass** eine weitere elektrisch ansteuerbare Ventileinheit (16) vorgesehen ist und dass eine durch die weitere elektrisch ansteuerbare Ventileinheit (16) pneumatisch ansteuerbare Förderleitungsabschaltventileinheit (32) vorgesehen ist, und dass die Ablassventileinheit (20, 20') durch die weitere elektrisch ansteuerbare Ventileinheit (16) pneumatisch angesteuert wird, so dass die Förderleitungsabschaltventileinheit (32) immer verschlossen wird, wenn die Ablassventileinheit (20, 20') geöffnet wird, und ein Förderleitungsvolumenverlust verhindert wird.

10. Verfahren nach Anspruch 9, **dadurch gekennzeichnet, dass** die elektronische Steuereinheit (34) die Druckluftversorgungsanlage in einen Energiespar-Betriebszustand überführt, bei dem die Kompressorkupplungsschaltventileinheit (30) die Kompressorkupplung (24) trennt.

11. Verfahren nach Anspruch 9 oder 10, **dadurch gekennzeichnet, dass** die elektronische Steuereinheit (34) die Druckluftversorgungsanlage (10) in einen Regenerations-Betriebszustand überführt, bei dem die Kompressorkupplungsschaltventileinheit (30) die Kompressorkupplung (24) trennt, die zweite elektrisch ansteuerbare Ventileinheit (18, 18') angesteuert wird und die pneumatisch ansteuerbare Ablassventileinheit (20, 20') eine Ablassleitung öffnet.

12. Verfahren nach Anspruch 9, 10 oder 11, **dadurch gekennzeichnet, dass** die Förderleitungsabschaltventileinheit (32) die Förderleitung (26) in dem Energiespar-Betriebszustand schließt.

13. Verfahren nach Anspruch 9, 10, 11 oder 12, **dadurch gekennzeichnet, dass** die Förderleitungsabschaltventileinheit (32) die Förderleitung (26) in dem Regenerations-Betriebszustand schließt.

14. Verfahren nach einem der Ansprüche 9 bis 13, **dadurch gekennzeichnet, dass** die elektronische Steuereinheit (34) die Druckluftversorgungsanlage in einen Förderlufterneuerungs-Betriebszustand überführt, bei dem die Kompressorkupplung (24) geschlossen ist, die Förderleitungsabschaltventileinheit (32) die Förderleitung (26) öffnet und die pneumatisch ansteuerbare Ablassventileinheit (20, 20') eine Ablassleitung öffnet.

15. Verfahren nach Anspruch 14, **dadurch gekennzeichnet, dass** der Förderlufterneuerungs-Betriebszustand insbesondere dann eingenommen wird, wenn ein mit der elektronischen Steuerung (34) verbundener Temperatursensor (36) einen für die Außentemperatur charakteristischen Wert liefert, der unterhalb eines Schwellenwertes liegt.

16. Verfahren nach einem der Ansprüche 9 bis 15, **dadurch gekennzeichnet, dass** die elektronische Steuerung (34) die Übergänge zwischen Förderzustand und Energiespar-Betriebszustand auf der Grundlage einer vorgegebenen Einschaltdruckschwelle und einer vorgegebenen Abschaltdruckschwelle steuert, wobei die Abschaltdruckschwelle einem größeren Druck als die Einschaltdruckschwelle entspricht.

17. Verfahren nach Anspruch 16, **dadurch gekennzeichnet, dass** die elektronische Steuereinheit (34) die Druckluftversorgungsanlage (10) in einen Förderzustand überführt, wenn ein druckluftverbraucherseitig erfasster Druck eine Einschaltdruckschwelle unterschreitet.

18. Verfahren nach Anspruch 16 oder 17, **dadurch gekennzeichnet, dass** die elektronische Steuereinheit (34) die Druckluftversorgungsanlage (10) in den Energiespar-Betriebszustand überführt, wenn ein druckluftverbraucherseitig erfasster Druck eine Abschaltdruckschwelle überschreitet.

19. Verfahren nach Anspruch 16, **dadurch gekennzeichnet, dass** die elektronische Steuereinheit (34) die Druckluftversorgungsanlage in einen Förderzustand überführt, wenn sich das Nutzfahrzeug in einer Schubbetriebsphase befindet und wenn ein druckluftverbraucherseitig erfasster Druck zwischen einer Einschaltdruckschwelle und einer Abschaltdruckschwelle liegt.

20. Verfahren nach Anspruch 18 oder 19, **dadurch gekennzeichnet, dass** die Abschaltdruckschwelle erhöht wird, wenn sich das Nutzfahrzeug in einer Schubbetriebsphase befindet.

## Claims

1. Compressed air supply system (10) for a commercial vehicle, having
- an air dryer unit (12) with a filter unit (14), with an electrically selectable valve unit (18, 18') and with a pneumatically selectable discharge valve unit (20, 20'),
- a compressor (22) with a coupling (24), which compressor (22) supplies compressed air to the air dryer unit via a feed line (26),
- a multi-circuit protective valve unit (28) which draws compressed air from the air dryer unit, and
- an electrically selectable compressor coupling switching valve unit (30),
wherein an electronic control unit (34) is provided which controls functions of the air dryer unit (12) and of the compressor coupling switching valve unit (30), **characterised in that** a further electrically selectable valve unit (16) is provided, and **in that** a feed line shut-off valve unit (32) is provided which can be pneumatically selected by the further electrically selectable valve unit (16), and **in that** the discharge valve unit (20, 20') is pneumatically selectable by the further electrically selectable valve unit (16), so that the feed line shut-off valve unit (32) is always closed if the discharge valve unit (20, 20') is open and a feed line volume loss is avoided.

2. Compressed air supply system (10) according to claim 1, **characterised in that** the electronic control unit (34) is suitable for placing the compressed air supply system (10) into an energy saving operating state in which the compressor coupling switching valve unit (30) separates the compressor coupling (24).

3. Compressed air supply system (10) according to claim 1 or 2, **characterised in that** the electronic control unit (34) is suitable for placing the compressed air supply system (10) into a regeneration operating state in which the compressor coupling switching valve unit (30) separates the compressor coupling (24), the electrically selectable valve unit (18, 18') is selected and the pneumatically selectable discharge valve unit (20, 20') opens a discharge line.

4. Compressed air supply system (10) according to claim 1, 2 or 3, **characterised in that** the feed line shut-off valve unit (32) closes the feed line (26) in the energy saving operating state.

5. Compressed air supply system (10) according to claim 1, 2, 3 or 4, **characterised in that** the feed line shut-off valve unit (32) closes the feed line (26) in the regeneration operating state.

6. Compressed air supply system (10) according to claim 4 or 5, **characterised in that** the electronic control unit (34) is suitable for placing the compressed air supply system into a feed air renewal operating state in which the compressor coupling (24) is closed, the feed line shut-off valve unit (32) opens the feed line (26) and the pneumatically selectable discharge valve unit (20, 20') opens a discharge line.

7. Compressed air supply system (10) according to claim 6, **characterised in that** the feed air renewal operating state can be assumed in particular when a temperature sensor (36) which is connected to the electronic controller (34) provides a value characteristic of the external temperature which lies below a threshold value.

8. Compressed air supply system (10) according to any of the preceding claims, **characterised in that** the discharge valve unit (20') has a control piston (64) which, during the ventilation of a control chamber, opens a discharge valve, with a 2/2-way valve function additionally being provided for blocking and opening up a regeneration air path.

9. Method for operating a compressed air supply system (10) for a utility vehicle, having
- an air dryer unit (12) with a filter unit (14), with an electrically selectable valve unit (18, 18') and with a pneumatically selectable discharge valve unit (20, 20'),
- a compressor (22) with a coupling (24), which compressor (22) supplies compressed air to the air dryer unit via a feed line (26),
- a multi-circuit protective valve unit (28) which draws compressed air from the air dryer unit, and
- an electrically selectable compressor coupling switching valve unit (30),
wherein the functions of the air dryer unit (12) and of the compressor coupling switching valve unit (30) are controlled by means of an electronic control unit (34), **characterised in that** a further electrically selectable valve unit (16) is provided, and **in that** a feed line shut-off valve unit (32) is provided which can be pneumatically selected by the further electrically selectable valve unit (16), and **in that** the discharge valve unit (20, 20') is pneumatically selected by the further electrically selectable valve unit (16), so that the feed line shut-off valve unit (32) is always closed if the discharge valve unit (20, 20') is open and a feed line volume loss is avoided.

10. Method according to claim 9, **characterised in that** the electronic control unit (34) places the compressed air supply system into an energy saving operating state in which the compressor coupling switching valve unit (30) separates the compressor coupling (24).

11. Method according to claim 9 or 10, **characterised in that** the electronic control unit (34) places the compressed air supply system (10) into a regeneration operating state in which the compressor coupling switching valve unit (30) separates the compressor coupling (24), the second electrically selectable valve unit (18, 18') is selected and the pneumatically selectable discharge valve unit (20, 20') opens a discharge line.

12. Method according to claim 9, 10 or 11, **characterised in that** the feed line shut-off valve unit (32) closes the feed line (26) in the energy saving operating state.

13. Method according to claim 9, 10, 11 or 12, **characterised in that** the feed line shut-off valve unit (32) closes the feed line (26) in the regeneration operating state.

14. Method according to any of claims 9 to 13, **characterised in that** the electronic control unit (34) places the compressed air supply system into a feed air renewal operating state in which the compressor coupling (24) is closed, the feed line shut-off valve unit (32) opens the feed line (26) and the pneumatically selectable discharge valve unit (20, 20') opens a discharge line.

15. Method according to claim 14, **characterised in that** the feed air renewal operating state is assumed in particular when a temperature sensor (36) which is connected to the electronic controller (34) provides a value characteristic of the external temperature which lies below a threshold value.

16. Method according to any of claims 9 to 15, **characterised in that** the electronic controller (34) controls the transitions between the feed state and the energy saving operating state on the basis of a predefined activation pressure threshold and a predefined deactivation pressure threshold, with the deactivation pressure threshold corresponding to a higher pressure than the activation pressure threshold.

17. Method according to claim 16, **characterised in that** the electronic control unit (34) places the compressed air supply system (10) into a feed state if a pressure measured at the compressed-air consumer side falls below an activation pressure threshold.

18. Method according to claim 16 or 17, **characterised in that** the electronic control unit (34) places the compressed air supply system (10) into the energy saving operating state if a pressure measured at the compressed-air consumer side exceeds a deactivation pressure threshold.

19. Method according to claim 16, **characterised in that** the electronic control unit (34) places the compressed air supply system into a feed state if the commercial vehicle is in an overrun operating phase and if a pressure measured at the compressed-air consumer side lies between an activation pressure threshold and a deactivation pressure threshold.

20. Method according to claim 18 or 19 **characterised in that** the deactivation pressure threshold is increased if the commercial vehicle is in an overrun operating phase.

## Revendications

1. Système (10) d'alimentation en air comprimé d'un véhicule utilitaire, comprenant
- une unité (12) de sécheur d'air, ayant une unité (14) de filtration, une unité (18, 18') de soupape, pouvant être commandé électriquement, et une unité (20, 20') de soupape de purge, pouvant être commandée pneumatiquement,
- un compresseur (22), ayant un accouplement (24), qui fournit de l'air comprimé à l'unité de sécheur d'air par un conduit (26) de refoulement,
- une unité (28) de soupape de protection à plusieurs voies, qui procure l'air comprimé de l'unité de sécheur d'air et
- une unité (30) de vanne de commutation d'accouplement de compresseur, qui peut être commandée électriquement,
dans lequel il est prévu une unité (34) électronique de commande, qui commande les fonctionnements de l'unité (12) de sécheur d'air et de l'unité (30) de vanne de commutation d'accouplement de compresseur, **caractérisé en ce qu'**il est prévu une autre unité (16) de vanne pouvant être commandée électriquement et **en ce qu'**il est prévu une unité (32) de vanne de fermeture du conduit de refoulement, pouvant être commandée pneumatiquement par l'autre unité (16) de vanne pouvant être commandée électriquement et **en ce que** l'unité (20, 20') de vanne de purge peut être commandée pneumatiquement par l'autre unité (16) de vanne pouvant être commandée électriquement, de manière à fermer toujours l'unité (32) de vanne de fermeture du conduit de refoulement, lorsque l'unité (20, 20') de vanne de purge est ouverte, et à empêcher une perte de volume dans le conduit de refoulement.

2. Système (10) d'alimentation en air comprimé suivant la revendication 1, **caractérisé en ce que** l'unité (34) électronique de commande' est propre à mettre le système (10) d'alimentation en air comprimé dans un état de fonctionnement en économie d'énergie, dans lequel l'unité (30) de vanne de commutation d'accouplement de compresseur sépare l'accouplement (24) de compresseur.

3. Système (10) d'alimentation en air comprimé suivant la revendication 1 ou 2, **caractérisé en ce que** l'unité (34) électronique de commande est propre à faire passer le système (10) d'alimentation en air comprimé dans un état de fonctionnement en régénération, dans lequel l'unité (30) de vanne de commutation d'accouplement de compresseur sépare l'accouplement (24) de compresseur, l'unité (18, 18') de vanne pouvant être commandée électriquement est commandée et l'unité (20, 20') de vanne de purge pouvant être commandée pneumatiquement ouvre un conduit de purge.

4. Système (10) d'alimentation en air comprimé suivant la revendication 1, 2 ou 3, **caractérisé en ce que** l'unité (32) de vanne de fermeture du conduit de refoulement ferme le conduit (26) de refoulement dans l'état de fonctionnement en économie d'énergie.

5. Système (10) d'alimentation en air comprimé suivant la revendication 1, 2, 3 ou 4, **caractérisé en ce que** l'unité (32) de vanne de fermeture du conduit de refoulement ferme le conduit (26) de refoulement dans l'état de fonctionnement en régénération.

6. Système (10) d'alimentation en air comprimé suivant l'une des revendications 4 ou 5, **caractérisé en ce que** l'unité (34) électronique de commande est propre à faire passer le système d'alimentation en air comprimé dans un état de fonctionnement en renouvellement de l'air refoulé, dans lequel l'accouplement (24) de compresseur est fermé, l'unité (32) de vanne de fermeture du conduit de refoulement ouvre le conduit (26) de refoulement et l'unité (20, 20') de vanne de purge pouvant être commandée pneumatiquement ouvre un conduit de purge.

7. Système (10) d'alimentation en air comprimé suivant la revendication 6, **caractérisé en ce que** l'état de fonctionnement en renouvellement de l'air de refoulement peut être pris, notamment, si un capteur (36) de température, relié à la commande (34) électronique, fournit une valeur caractéristique de la température extérieure, qui est en dessous d'une valeur de seuil.

8. Système (10) d'alimentation en air comprimé suivant l'une des revendications précédentes, **caractérisé en ce que** l'unité (20') de vanne de purge a un piston (64) de commande, qui, lors de l'alimentation en air d'un espace de commande, ouvre une vanne de purge, dans lequel, en outre, il est prévu une fonction de vanne à 2/2 voies pour fermer ou dégager un trajet d'air de régénération.

9. Procédé pour faire fonctionner un système (10) d'alimentation en air comprimé d'un véhicule utilitaire, comprenant
- une unité (12) de sécheur d'air, ayant une unité (14) de filtration, une unité (18, 18') de soupape, pouvant être commandé électriquement, et une unité (20, 20') de soupape de purge, pouvant être commandée pneumatiquement,
- un compresseur (22), ayant un accouplement (24), qui fournit de l'air comprimé à l'unité de sécheur d'air par un conduit (26) de refoulement,
- une unité (28) de soupape de protection à plusieurs voies, qui procure l'air comprimé de l'unité de sécheur d'air et
- une unité (30) de vanne de commutation d'accouplement de compresseur, qui peut être commandée électriquement,
dans lequel on commande les fonctionnements de l'unité (12) de sécheur d'air et de l'unité (30) de vanne de commutation d'accouplement de compresseur par une unité (34) électronique de commande, **caractérisé en ce qu'**il est prévu une autre unité (16) de vanne pouvant être commandée électriquement et **en ce qu'**il est prévu une unité (32) de vanne de fermeture du conduit de refoulement, pouvant être commandée pneumatiquement par l'autre unité (16) de vanne pouvant être commandée électriquement et **en ce que** l'on commande pneumatiquement l'unité (20, 20') de vanne de purge par l'autre unité (16) de vanne pouvant être commandée électriquement, de manière à fermer toujours l'unité (32) de vanne de fermeture du conduit de refoulement, lorsque l'unité (20, 20') de vanne de purge est ouverte, et à empêcher une perte en volume dans le conduit de refoulement.

10. Procédé suivant la revendication 9, **caractérisé en ce que** l'unité (34) électronique de commande fait passer le système d'alimentation en air comprimé dans un état de fonctionnement en économie d'énergie, dans lequel l'unité (30) de commutation d'accouplement de compresseur sépare l'accouplement (24) de compresseur.

11. Procédé suivant la revendication 9 ou 10, **caractérisé en ce que** l'unité (34) électronique de commande fait passer le système (10) d'alimentation en air comprimé dans un état de fonctionnement en régénération, dans lequel l'unité (30) de vanne de commutation d'accouplement de compresseur sépare l'accouplement (24) de compresseur, la deuxième unité (18, 18') de vanne pouvant être commandée électriquement est commandée et l'unité (20, 20') de vanne de purge pouvant être commandée pneumatiquement ouvre le conduit de purge.

12. Procédé suivant la revendication 9, 10 ou 11, **caractérisé en ce que** l'unité (32) de vanne de fermeture du conduit de refoulement ferme le conduit (26) de refoulement dans l'état de fonctionnement en économie d'énergie.

13. Procédé suivant la revendication 9, 10, 11 ou 12, en ce que l'unité (32) de vanne de fermeture du conduit de refoulement ferme le conduit (26) de refoulement dans l'état de fonctionnement en régénération.

14. Procédé suivant l'une des revendications 9 à 13, **caractérisé en ce que** l'unité (34) électronique de commande fait passer l'installation de l'alimentation en air comprimé dans un état de fonctionnement de renouvellement de l'air de refoulement, dans lequel l'accouplement (24) de compresseur est fermé, l'unité (32) de vanne de fermeture du conduit de refoulement ouvre le conduit (26) de refoulement et l'unité (20, 20') de purge pouvant être commandé pneumatiquement ouvre un conduit de purge.

15. Procédé suivant la revendication 14, **caractérisé en ce que** l'état de fonctionnement en renouvellement de l'air de refoulement peut être pris, notamment, si un capteur (36) de température, relié à la commande (34) électronique, fournit une valeur caractéristique de la température extérieure, qui est en dessous d'une valeur de seuil.

16. Procédé suivant l'une des revendications 9 à 15, **caractérisé en ce que** la commande (34) électronique commande les passages entre l'état de refoulement et l'état de fonctionnement en économie d'énergie, sur la base d'un seuil de pression de mise en circuit donné à l'avance et d'un seuil de pression de mise hors circuit donné à l'avance, le seuil de pression de mise hors circuit correspondant à une pression plus grande que le seuil de pression de mise en circuit.

17. Procédé suivant la revendication 16, **caractérisé en ce que** l'unité (34) électronique de commande fait passer le système (10) d'alimentation en air comprimé dans un état de refoulement, lorsqu'une pression, détectée du côté du consommateur d'air comprimé, devient inférieure à un seuil de pression de mise en circuit.

18. Procédé suivant la revendication 16 ou 17, **caractérisé en ce que** l'unité (34) électronique de commande fait passer le système (10) d'alimentation en air comprimé dans un état de fonctionnement en économie d'énergie, lorsqu'une pression, détectée du côté du consommateur d'air comprimé, dépasse un seuil de pression de mise hors circuit.

19. Procédé suivant la revendication 16, **caractérisé en ce que** l'unité (34) électronique de commande fait passer l'installation de l'alimentation en air comprimé dans un état de refoulement, lorsque le véhicule utilitaire se trouve dans une phase de fonctionnement en roue libre et lorsqu'une pression détectée du côté du consommateur d'air comprimé se trouve entre un seuil de pression de mise en circuit et un seuil de pression de mise hors circuit.

20. Procédé suivant la revendication 18 ou 19, **caractérisé en ce que** l'on élève le seuil de pression de mise hors circuit, lorsque le véhicule utilitaire se trouve dans une phase de fonctionnement en roue libre.
